# EUROPEAN PATENT APPLICATION

(11) **EP 3 626 323 A1**
(43) Date of publication of application: **25.03.2020**
(21) Application number: 19198268.5
(22) Date of filing: 19.09.2019
(51) Int. Cl.: A63H 33/38, G09B 5/06, A63F 9/00, B42D 1/00, A63H 5/00, G09F 19/08

(54) **ARTICULATED STORYTELLING APPARATUS**

(30) Priority: 21.09.2018 CH 11412018
(71) Applicant: Beira, Ricardo, 1012 Lausanne (CH)
(72) Inventor: Beira, Ricardo, 1012 Lausanne (CH)
(74) Representative: P&TS SA (AG, Ltd.)

(57) **Abstract**

The present invention relates to articulated storytelling apparatus (1) comprising: a book-like actuated frame (2) comprising covers (2a, 2b) and one or more middle leaves (2c), wherein said covers and one or more middle leaves are pivotally attached on the book-like actuated frame, and at least one remotely actuated story character (5) that is able to move and participate in the story presented by the articulated storytelling apparatus (1).

## Description

### Field of the invention

This invention relates to an actuated story book that presents a story in the form of illustrations, pop-up structures, moving objects, and also a physical representation of multiple actuated characters of the said story. The apparatus further includes a sound reproducing system, adapted to automatically render musical compositions and other sound effects related to said story upon the multiple sequences of the story.

### Background of the invention

The general public has long been fascinated with a variety of entertainment objects or assemblies which are considered to be educational, amusing and emotionally stimulating. These entertainment systems or assemblies are constructed in a variety of forms to be used by either children or adults. Some examples of these systems are: books, mechanical automatons and music boxes.

For the majority of people, books are part of their everyday life. They have been there for centuries and without them today's knowledge of our past ancestors, cultures and civilizations would have been impossible. They are packed with insights into life lessons, love, fear, prayer and helpful advices. Given their ability to describe and show multiple actions, scenarios and characters, illustrated books have been since long a preferred mean to present and tell stories, having been considered objects of great value throughout human history.

Over the years, some innovations have been brought as attempts to increase the sensory stimulation of books.

One of those attempts was made by introducing paper pop-ups, which consist of three dimensional illustrated structures that are self-erecting, and sometimes articulated, being particularly adapted to be located between adjacent pages of a book, folder or the like (some examples in US2458879, US2511211 or US4337589). This concept leads also to the development of multiple toys and foldable playcenters, in which different structures can be flattened and packed away in a box or similar container, becoming much more compact to store after being used (some examples in US7594844, US7618301 and US20060286891).

Another innovation to enhance the levels of stimulation of books consisted in the introduction of passive moving objects within the pages, so that the user could use and play with the book in a more interactive way (some examples in GB515852A, US1490295, US2484896A, US3256634A, US3273894, US4365438A, US5871237, US6764372 and US20080003919). In spite of the broad spectrum of ages and purposes for which these systems have been constructed, these systems generally employ similar concepts, comprising one or more movable objects to be manipulated by the user.

Music boxes have also been objects of amusement and entertainment since their invention, in 1796 (example in US2800048). Even before the development of electronic and digital systems, they were a mean of providing live music without performers. The sound produced is very much like a group of harpists or a hand bell choir, which is still able to catch a huge host of fans in the 21st century, who seek their crystal-clear tones and the skilled craftsmanship that these objects represent.

Over the years, music box producers introduced several ingenious ways of incorporating their musical movements in a large variety of objects (some examples in US2657607 and US2800048), such as souvenir chalets, books (or photograph albums), cigar and cigarette boxes, travel sets, boxes, watches, clocks and all sorts of toys. In order to make music boxes more spectacular, an effort has been made to animate them, particularly by adding small moving characters and animals (some examples in CH352221A, US2840949A, US4573939, US4890828A, US4987787 and US5226845A).

The creation of these animated characters has boosted the development of a more advanced generation of mechanical automatons, which are self-operating machines, designed to automatically follow a predetermined sequence of operations (some examples in US512089, US549039, US1207022, US1410429, US1732197, US2466214, US2504811, US2528968, US2585467, US2895258, US3390481, US3672097, US3888023, US4389811, US4545775, US4662855, US4676764, US4903424, US5176560 and US6990921). Some automata, have been designed to give the illusion to the casual observer that they are alive, operating under their own power. As a result, they have been objects of wonder and delight from the 18th century until nowadays.

Other kind of systems using small animated characters are mechanical theatres (examples in US4804348, US1001395, US1589432, US2874513, US4169335, US4180932, US4344243, US5040319, US5501628, US5698801, US6039625), where the different characters are located over a box while being actuated by a central control unit, either mechanical and electrical, in order to perform different actions. Some of these systems further include a music system.

The prior art teaches the use of different systems to increase the levels of stimulation of books, namely pop-up structures and interactive moving sections of pages and objects. In addition, the prior art teaches the use of mechanical and electronic systems on musical apparatus, some of them having the shape of a box while other having animated mechanical characters. Finally, the prior art further teaches the use of mechanical and electrical systems for the animation of mechanical characters and objects. These can operate alone or in group (mechanical theaters), typically over a box-like object, which may comprise a music system. However, the prior art does not teach the use of mechanical and/or electrical systems in an articulated and actuated book with actuated characters and an embedded musical system, which is particularly suitable for storytelling. The present invention fulfills these needs and provides further related advantages as described in the following summary.

### Summary of the invention

An aim of the present invention is to provide a storytelling apparatus, comprising a unique combination of three different devices, which have been used over several centuries to provide amusement for children and adults: the book, the music box and the automaton.

Disclosed herein is an articulated apparatus comprising: a book-like actuated frame comprising covers and one or more middle leaves, wherein said covers and one or more middle leaves are pivotally attached on the book-like actuated frame; and at least one remotely actuated story character that is able to move and participate in the story presented by the articulated storytelling apparatus.

In an embodiment, said covers and one or more middle leaves are able to move autonomously with the progression of the various acts of the story.

In an embodiment, the articulated storytelling apparatus further comprises transmission means configured to actuate the at least one remotely actuated story character, and a mechanical or electric remote control unit configured to deliver motion to the transmission means.

In an embodiment, one or more remotely actuated story characters are inserted in a story scene through cavities or grooves on said one or more middle leaves.

In an embodiment, the articulated storytelling apparatus further comprises an automatic sound system configured to generate electronically or mechanically music, and/or other sound effects, during the different actions and scenes of the story.

In an embodiment, said covers and one or more middle leaves and one or more remotely actuated story characters are all interconnected with said remote control unit.

In an embodiment, the book-like actuated frame is adjacent to a base case, in which the automatic sound system, the control unit and part of the actuation means are located.

In an embodiment, the sound system, the control unit and the actuations means are embedded inside the book-like actuated frame.

In an embodiment, the flip-of-page action of said covers and one or more middle leaves by a user provides energy for the at least one remotely actuated story character.

In an embodiment, each flip-of-page triggers the movement of different articulated three-dimensional pop-up structures or any other static or moving objects.

In an embodiment, the flipping movement of said covers and/or said one or more middle leaves are aided by a gravity-compensation system comprising springs elements and/or counterweights.

In an embodiment, the articulated storytelling apparatus further comprises an internal clock.

### Brief description of the drawings

The invention will be better understood with the aid of the description of several embodiments given by way of examples and illustrated by the figures, in which:
- Figure 1 is a perspective view of the articulated storytelling apparatus according to a preferred embodiment in a closed position;
- Figure 2 is a perspective view of the articulated storytelling apparatus of Figure 1 in an open position;
- Figure 3 is a side view of the articulated storytelling apparatus according to an embodiment with a first type of gravity-compensation system;
- Figure 4 is a side view of the articulated storytelling apparatus according to another embodiment with a second type of gravity compensation-system;
- Figure 5 is a perspective view of the articulated storytelling apparatus according to the preferred embodiment in an open position, with a raised articulated pop-up structure for the characterization of a specific scenario;
- Figure 6 is a side view of the articulated storytelling apparatus according to another embodiment with a third type of gravity compensation-system;
- Figure 7 is a perspective view of the articulated storytelling apparatus according to the preferred embodiment in an open position, with focus on the grooves and holes through which the different actuated characters of the story are inserted in the scene;
- Figure 8 is a perspective view of the articulated storytelling apparatus according to another embodiment in an open position, where different characters and objects of the story are moved within the pages;
- Figure 9 is a perspective view of the articulated storytelling apparatus according to another embodiment in an open position, where different characters and objects of the story are moved within the pop-up structures;
- Figure 10 is a perspective view of the articulated storytelling apparatus according to the preferred embodiment with an automatic sound system;
- Figure 11 is a perspective view of the articulated storytelling apparatus according to the preferred embodiment with a mechanically driven control unit;
- Figure 12 is a perspective view of the articulated storytelling apparatus according to another embodiment with an electrically driven control unit;
- Figure 13 is a perspective view of the articulated storytelling apparatus according to the preferred embodiment with the control unit and automatic sound system embedded within the book-like actuated frame; and
- Figure 14 is a perspective view of the articulated storytelling apparatus according to an embodiment with an internal clock.

### Detailed description of several embodiments of the invention

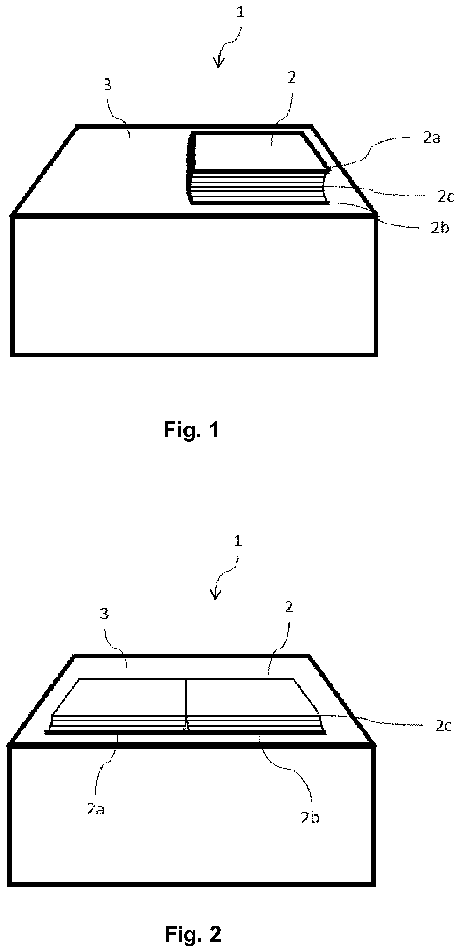

Figure 1 shows the storytelling apparatus 1, according to a preferred embodiment, which comprises a frame 2 having a book-like configuration and resting on the top of a base case 3.

As can be seen in Figures 1 and 2, the articulated covers 2a, 2b and middle leaves 2c are able to move autonomously with the progression of the various acts of the story. However, in some other embodiments, the articulated covers 2a, 2b and middle leaves 2c may be able to move by the action of the users. In these embodiments, the energy generated by these user-actuated movements, may be stored and channeled to actuate the different moving characters and objects of the story.

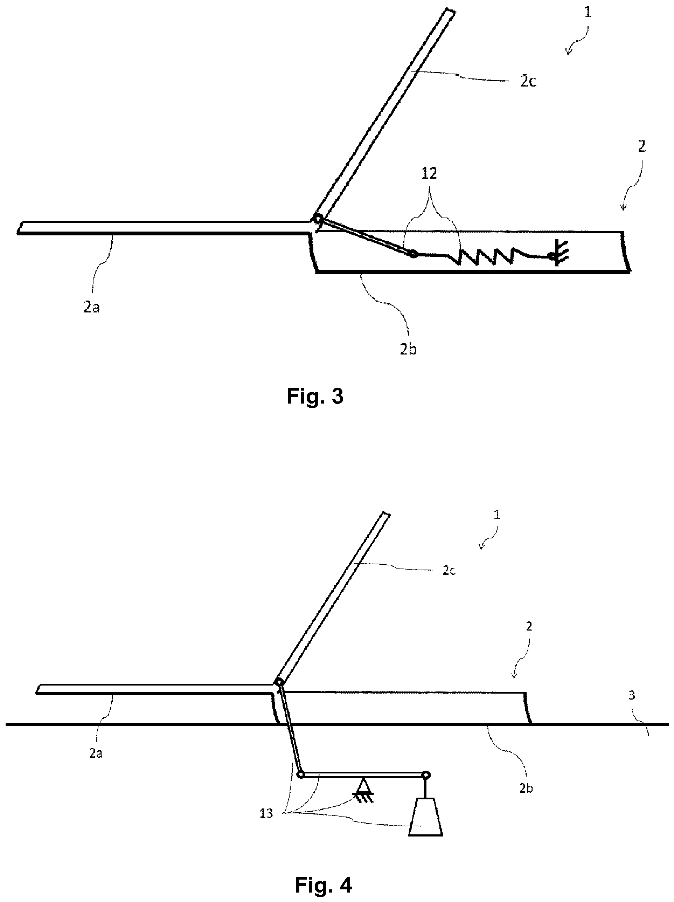

In some embodiments, the flipping movement of the articulated covers 2a,2b and middle leaves 2c may be helped by a gravity-compensation system of springs elements 12 (Figure 3) and/or counterweights 13 (Figure 4), which is able to minimize the effect of gravity on the moving parts. The gravity-compensation systems 12,13 may be contained within the articulated covers 2a,2b and middle leaves 2c (Figure 3) and/or partially inside the base case 3 (Figure 4).

At the end of the story, all the turned articulated covers 2a,2b and middle leaves 2c move back to the original position, supported or not by a gravity-compensation system 12,13.

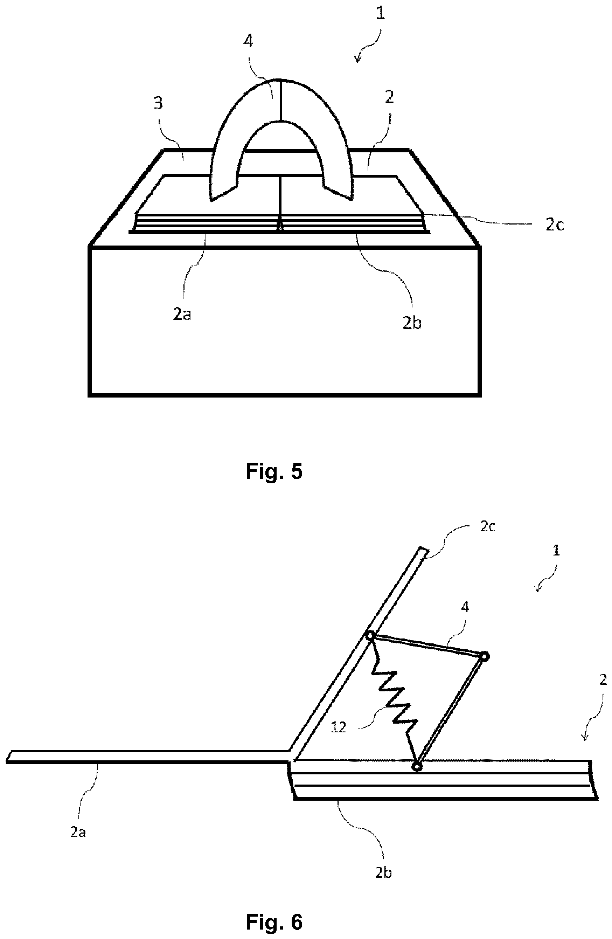

Each flip-of-leave 2c may raise, different articulated pop-up structures 4 (Figure 5) and other objects, which can have different shapes, colors and illustrations, enabling a richer three-dimensional characterization of the different scenarios of the story. This raising movement may be driven by the relative movement of two adjacent leaves or by different means of actuation. Other means of actuation my further be used to actuate different moving elements (like characters or objects) on the articulated pop-up structures 4.

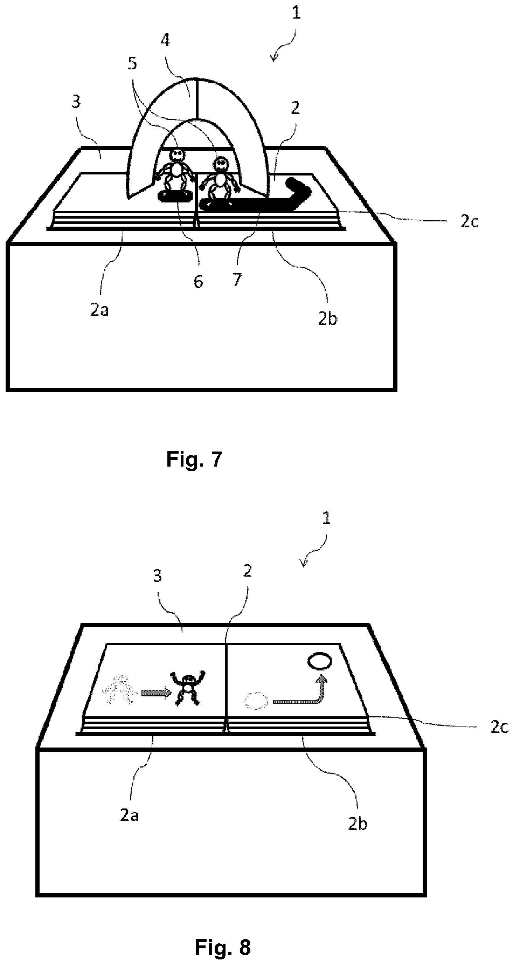

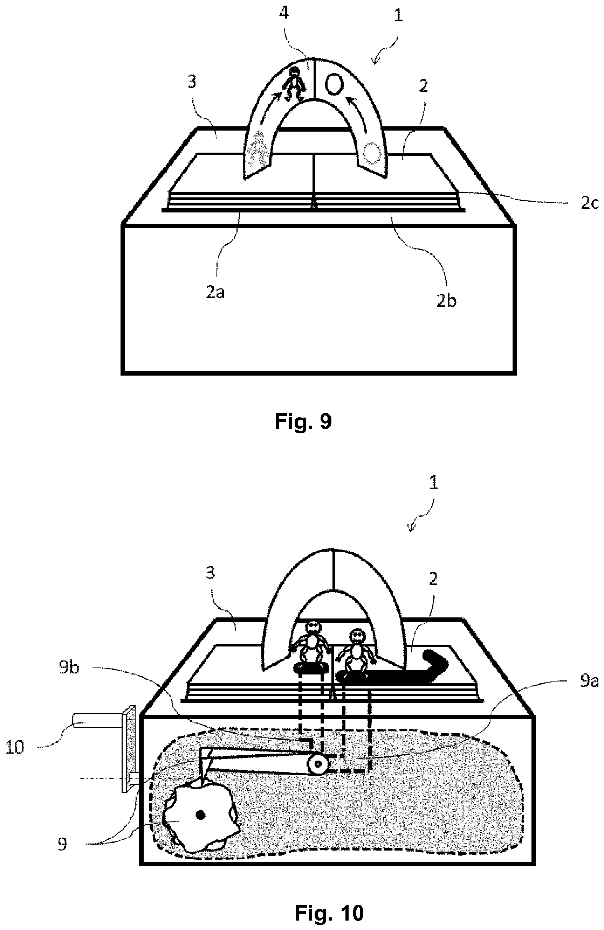

In other embodiments, gravity compensation-systems 12,13 may be placed within the pop-up structures 4 so that they became relatively hidden from the viewer (Figure 6). For each scenario, one or more articulated characters 5 may be introduced in the scene to represent different roles on the story (Figure 7). They may be composed of multiple articulated elements that may be remotely actuated from a remote control unit 9, located at the base case 3 or controlled by the movements of adjacent pages, pop-ups of springs of weights stored within the pages. Before the complete flipping of a scene, they may be flipped-in, like a foldable structure, or inserted through different cavities 6 or grooves 7. Characters 8, articulated or not, or other objects, may also be moved within the pages and their illustrated scenarios (Figure 8) or within the pop-up structures (Figure 9).

In order to actuate the articulated characters 5, mechanical actuation means may be provided inside the base case 3, composed by a motor source 10 and a control unit 9. For instance, in certain embodiments, for each degree-of-freedom to be actuated, a cam component may be provided on the control system 9.

In this way, the motor source 10 actuates the cam components, whose rotation is converted into movements of the multiple followers; naturally the shape of the different cams determines the type of movement of the animated characters 5, through the actuation means 9a (Figure 10), which may comprise rigid parts, cables, belts or chains. The control unit 9 can have different shapes to provide a selected movement for each one of the animated characters 5 and any particular synchronism between the different characters and the movements of the different covers 2a, 2b and middle leaves 2c, different pop-up structures 4 and any other moving scene elements. In Figure 10 a simple cam-and-follower system is shown but different types of control units 9 can be connected to the motor source 10, depending on the number and arrangement of the animated characters 5 and other moving elements on the storytelling apparatus 1.

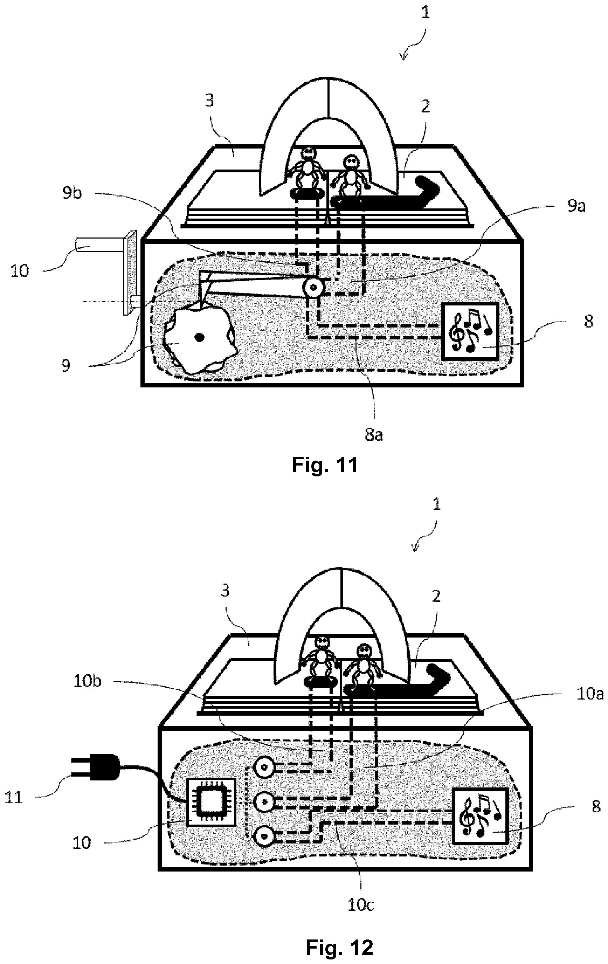

The storytelling apparatus 1 may further comprise an automatic sound system 8, which may be, or not, advantageously fixed inside the base case 3 and hidden from the user's view (Figure 11). The automatic sound system 8 can be of a mechanical type, actuated directly by a control unit 9, through actuation means 8a, as it is shown in Figure 11, and synchronized with the movements of the characters 5 (which are actuated through actuation means 9a and 9b) and the different actions and scenes of the story. Therefore, the hinged covers 2a, 2b and leaves 2c of the book-like actuated frame 2, the pop-up structures 4, the articulated figures 5 and the sound system 8 may be all interconnected with the same control unit 9 for motion actuation, which can be electrically or mechanically driven. However, in some embodiments multiple motion actuation systems may be used.

In another embodiment, the mechanical type automatic sound system 8 may be replaced by an electronic sound system, such as a magnetic tape recorder, in order to reproduce sounds synchronized with the character's movements (Figure 12).

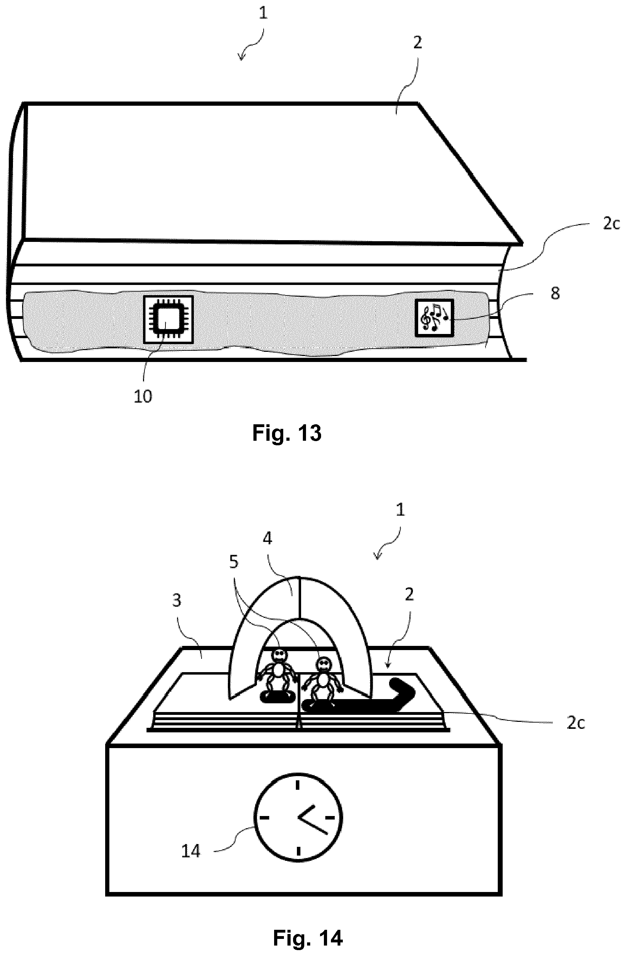

In yet another embodiment, shown in Figure 13, the storytelling apparatus 1 may have the sound system 8, the control unit 9 and the actuation means 9a and 9b embedded in the frame 2, within a volume occupying book's final pages. In this configuration, without a base case 3, the storytelling apparatus 1 may become more compact and, therefore, easier to transport and store.

In some embodiments, the he storytelling apparatus may also incorporate a clock 14, whose display may or not be visible to the user, so that the action of the story can be triggered at specific predefined times (Figure 14).

## Claims

1. An articulated storytelling apparatus (1) comprising:
- a book-like actuated frame (2) comprising covers (2a, 2b) and one or more middle leaves (2c), wherein said covers and one or more middle leaves are pivotally attached on the book-like actuated frame, and
- at least one remotely actuated story character (5) that is able to move and participate in the story presented by the articulated storytelling apparatus (1).

2. The articulated storytelling apparatus (1) according to claim 1, wherein said covers (2a, 2b) and one or more middle leaves (2c) are able to move autonomously with the progression of the various acts of the story.

3. The articulated storytelling apparatus (1) according to claim 1 or 2, further comprising transmission means (9a, 9b) configured to actuate the at least one remotely actuated story character (5), and a mechanical or electric remote control unit (9) configured to deliver motion to the transmission means (9a, 9b).

4. The articulated storytelling apparatus (1) according to any preceding claim, wherein one or more remotely actuated story characters (5) are inserted in a story scene through cavities (6) or grooves (7) on said one or more middle leaves (2c).

5. The articulated storytelling apparatus (1) according to claim 3, further comprising an automatic sound system (8) configured to generate electronically or mechanically music, and/or other sound effects, during the different actions and scenes of the story.

6. The articulated storytelling apparatus (1) according to any of claims 3 to 5 when depending upon claim 3, wherein said covers (2a, 2b) and one or more middle leaves (2c) and one or more remotely actuated story characters (5) are all interconnected with said remote control unit (9).

7. The articulated storytelling apparatus (1) according to claims 5, wherein the book-like actuated frame (2) is adjacent to a base case (3), in which the automatic sound system (8), the control unit (9) and part of the actuation means (9a, 9b) are located.

8. The articulated storytelling apparatus (1) according to claims 5, wherein the sound system (8), the control unit (9) and the actuations means (9a, 9b) are embedded inside the book-like actuated frame (2).

9. The articulated storytelling apparatus (1) according to claim 1, wherein the flip-of-page action of said covers (2a, 2b) and one or more middle leaves (2c) by a user provides energy for the at least one remotely actuated story character (5).

10. The articulated storytelling apparatus (1) according to claim 9, wherein each flip-of-page triggers the movement of different articulated three-dimensional pop-up structures (4) or any other static or moving objects.

11. The articulated storytelling apparatus (1) according to any preceding claim, wherein the flipping movement of said covers (2a,2b) and/or said one or more middle leaves (2c) are aided by a gravity-compensation system comprising springs elements (12) and/or counterweights (13).

12. The articulated storytelling apparatus (1) according to any preceding claim, comprising an internal clock (14).
